**Europäisches Patentamt**

**European Patent Office**

**Office européen des brevets**

(19)

(11) Veröffentlichungsnummer : **0 446 251 B1**

(12)

# EUROPÄISCHE PATENTSCHRIFT

(45) Veröffentlichungstag der Patentschrift :
**22.07.92 Patentblatt 92/30**

(51) Int. Cl.$^5$ : **G11B 5/584, H04N 5/782**

(21) Anmeldenummer : **89913208.8**

(22) Anmeldetag : **28.11.89**

(86) Internationale Anmeldenummer :
**PCT/EP89/01445**

(87) Internationale Veröffentlichungsnummer :
**WO 90/06573 14.06.90 Gazette 90/14**

(54) **VERFAHREN ZUR SPURNACHSTEUERUNG IN MAGNETBANDGERÄTEN.**

(30) Priorität : **02.12.88 DE 3840630**

(43) Veröffentlichungstag der Anmeldung :
**18.09.91 Patentblatt 91/38**

(45) Bekanntmachung des Hinweises auf die
Patenterteilung :
**22.07.92 Patentblatt 92/30**

(84) Benannte Vertragsstaaten :
**AT BE CH DE ES FR GB IT LI NL SE**

(56) Entgegenhaltungen :
**EP-A- 0 117 753**
**US-A- 4 587 580**
**US-A- 4 656 539**
**US-A- 4 816 930**
**Patent Abstracts of Japan, vol. 11, Nr. 121,**
**P568, JP 61-265764**

(73) Patentinhaber : **DEUTSCHE**
**THOMSON-BRANDT GMBH**
**W-7730 Villingen-Schwenningen (DE)**

(72) Erfinder : **KAADEN, Jürgen**
**Im Tannhörnle 10**
**W-7730 VS-Villingen (DE)**
Erfinder : **BIGGE, Franz**
**Bleichestr. 5**
**W-7730 VS-Villingen (DE)**
Erfinder : **GILLOT, Paul, André**
**13, rue du Parc**
**F-77300 Fontainebleau (FR)**

(74) Vertreter : **Einsel, Robert, Dipl.-Ing.**
**Deutsche Thomson-Brandt GmbH Patent- und**
**Lizenzabteilung Göttinger Chaussee 76**
**W-3000 Hannover 91 (DE)**

EP 0 446 251 B1

## Beschreibung

Die Erfindung betrifft ein Verfahren zur Spurnachsteuerung in Magnetbandgeräten nach dem Oberbegriff des Anspruchs 1 sowie ein Magnetbandgerät nach dem Oberbegriff des Anspruchs 5 Wenn ein Magnetkopf beim Lesen eine Spur verläßt und mehr oder weniger in eine benachbarte Spur gerät, erfolgt ein Übersprechen aus der Nachspur oder es werden falsche Signale gelesen. Insbesondere bei Aufzeichnung digitaler Signale wird das korrekte Lesen der Signale dann erschwert oder unmöglich.

Aus der EP-A- 117 753 ist es bekannt, für eine automatische Spurnachführung beim Lesen, also bei der Wiedergabe, in einem oder mehreren Spurabschnitten Kennsignale aufzuzeichnen. Diese sind in nebeneinanderliegenden Spuren derart unterscheidbar ausgebildet, daß durch Auswertung der Kennsignale eine Stellgröße gewonnen werden kann. Diese Stellgröße zeigt an, um welchen Betrag und in welcher Richtung der Magnetkopf von seiner Sollspur abweicht. Sie wird dazu ausgenutzt, über eine zusätzliche Steuerung der Kopftrommel oder des Bandvorschubs den Kopf wieder auf seine Sollspur zurückzuführen.

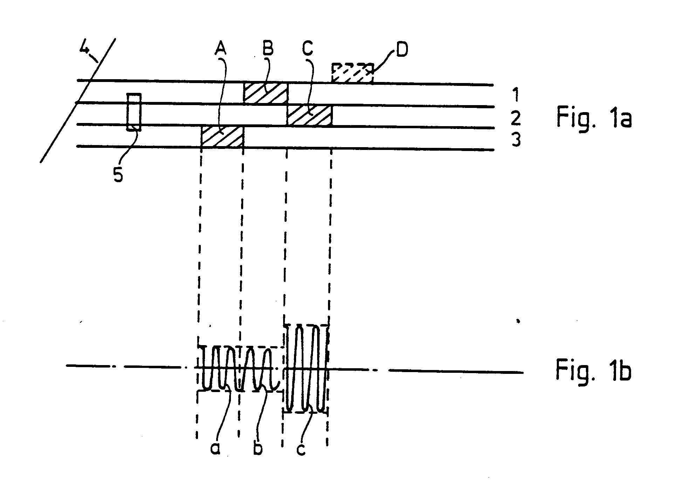

Bei dem in jüngerer Zeit entwickelten R-DAT-System, einem System zur digitalen Tonaufzeichnung auf Magnetband, liegen die Spuren ohne Abstand nebeneinander, und die Spaltlage der Magnetköpfe ist größer als die Spurbreite, so daß bei Mittenlage eines Kopfes auf einer Spur jeweils auch die Nachbarspuren zu einem Teil von dem Kopf mit erfaßt werden. Ein Übersprechen der Nutzsignale aus den Nachbarspuren wird dadurch verhindert, daß die Arbeitsspalte der beiden Köpfe gegensinnig zueinander geneigt sind. Für die Kennsignale wird das Übersprechen aus den Nachbarspuren zur Spurnachsteuerung ausgenutzt, was anhand von Fig. 1 erläutert werden soll.

Fig. 1 zeigt drei benachbarte Schrägspuren 1, 2 und 3 auf einem Band 4, wobei in jeder Spur ein Kennsignal A, B, C gleicher Länge so aufgezeichnet ist, daß die Kennsignale in den drei Spuren gegeneinander versetzt sind, sich aber aneinander anschließen. Wenn jetzt der Magnetkopf 5 die mittlere Spur 2 in korrekter Mittenlage abtastet, ergeben die Kennsignale A und B aus den Nachbarspuren 1 und 3 gleich große kleine Amplituden a und b, und das Kennsignal C aus der mittleren Spur 2 ergibt die größere Amplitude c. Bei abweichender Spurlage in Richtung auf Spur 1 steigt die Amplitude b, und bei abweichender Spurlage in Richtung auf Spur 3 steigt die Amplitude a. Unabhängig von der Abtastung der Nutzsignale liefern die Kennsignale bei solchen Abweichungen eine Stellgröße, die als Ist-Wert in eine Phasenregelung eingegeben wird, die die richtige Spurlage durch Beeinflussung der Antriebswelle für den Bandvorschub wiederherstellt.

Aufeinanderfolgende Schrägspuren werden abwechselnd von den beiden Köpfen des Kopfrades beschrieben. Eine genaue Spurnachsteuerung setzt demzufolge voraus, daß die den Köpfen nachgeschalteten Verstärker bei richtiger Spurlage Signale mit gleicher Amplitude liefern. In der Praxis streuen jedoch die Kopfverstärker-Ausgänge, so daß sich bei konstanter Spurabweichung eine unterschiedliche Stellgröße für die Spurnachsteuerung ergibt und das Spuroptimum nicht erreicht werden kann.

Um diesen Mangel zu beseitigen, ist es bekannt, bei der Herstellung des Gerätes im Werk mittels einer Meßkassette, auf der die Kennsignale in allen Spuren mit gleichen Pegeln aufgezeichnet sind, die beiden Kanäle durch Potentiometer auf gleichen Wert einzustellen. Dies ist einerseits umständlich und erfordert andererseits einen hohen Aufwand für die Aufbereitungs-Elektronik.

In der Praxis hat sich zudem gezeigt, daß eine ganze Reihe von Faktoren die einmal vorgenommene werksseitige Einstellung verfälschen kann. So bleiben Alterungen der Einstellung, ein Verschleiß der Köpfe, eine Verschmutzung der Köpfe und Unsymmetrien bei der Aufnahme unberücksichtigt. Die Folge davon sind fehlerhafte Regelsignale für die Spurlage, die zu einer mangelhaften Wiedergabe der Nutzsignale führen und eine Neueinstellung des Gerätes in der Werkstatt oder in der Fabrik erfordern.

Der Erfindung liegt die Aufgabe zugrunde, ein Verfahren der eingangs genannten Art zu schaffen, mit dem auf einfache Weise und mit geringem Aufwand ohne Einschaltung des Herstellers oder einer Werkstatt die Lieferung korrekter Spurnachsteuerungs-Signale erreicht werden kann.

Die gestellte Aufgabe wird gemäß der Erfindung den Gegenstand des Anspruchs 1 dadurch gelöst, Ein Magnet-bandgerät gemäß der Erfindung ist im Anspruch 5 enthalten.

Der Korrekturwert kann einmal werksseitig eingestellt und vorgegeben werden. Es ist aber auch möglich, daß der Benutzer selbst die Korrektur, wenn immer nötig, vornehmen und auch wiederholen kann, sei es mit einer Meßkassette oder unter Verwentung von vorhandenen bespielten Kassetten.

Ein Gerät zur Durchführung des Verfahrens enthält Mittel, die die Meßphase vor Beginn der Nutzsignal-Wiedergabe einschalten, wobei diese Mittel vorzugsweise dem Betriebsartenschalter zugeordnet werten.

Es ist dabei möglich, dem Betriebsartenschalter eine besondere Schaltstellung für die Einschaltung des Meßverfahrens zuzuordnen. Dann kann beispielsweise vorher eine Meßkassette eingelegt werden. Es kann aber auch die Einschaltung des Meßverfahrens bei jeder Einschaltung auf Wiedergabebetrieb erfolgen. Dann hat der Benutzer keine Eingriffsmöglichkeit, sondern die Einschaltung des Meßverfahrens erfolgt automatisch, so daß immer dafür gesorgt wird, daß am Verstärkerausgang die Amplituden der Kennsignale beider Köpfe gleich sind.

Die Erfindung wird nachfolgend anhand der Zeichnung näher erläutert, Darin stellen dar:

Fig. 1a die bereits vorangehend erläuterte Darstellung der Kennsignale,

Fig. 1b die zugehörigen Amplituden bei der Abtastung der Kennsignale,

Fig. 2 ein Signaldiagramm zur Erläuterung des erfindungsgemäßen Korrekturverfahrens, und

Fig. 3 ein Blockschaltbilt eines Gerätes zur Durchführung des erfindungsgemäßen Verfahrens.

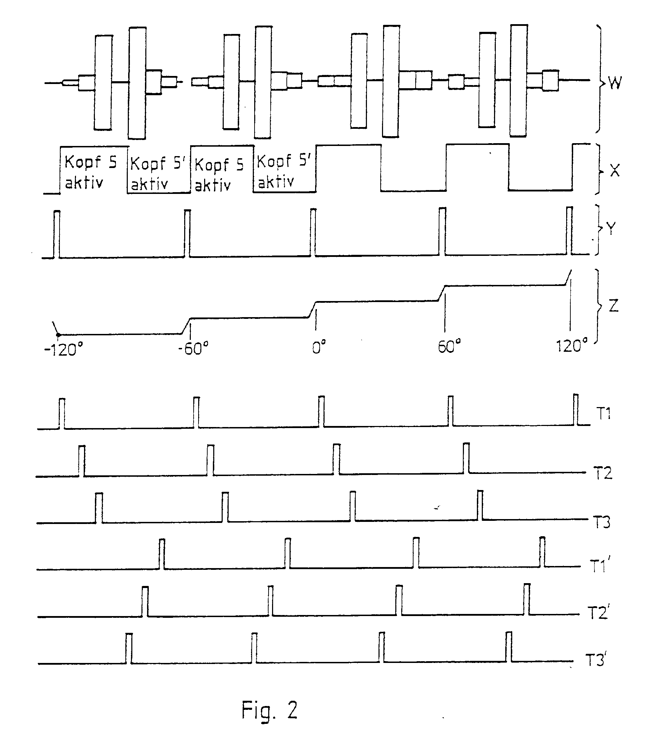

Bei dem Signaldiagramm von Fig. 2 sind mit w die Amplituden der Kennsignal-Sequenzen bezeichnet, die bei verschiedenen Bandvorschubphasen z gemessen werden, wobei angenommen ist, daß die erste Messung bei -120° beginnt und sich dann bei -60°, bei 0°, bei +60° und bei +120° usw. fortsetzt. Die Amplituden a, b, c der ersten Kennsignal-Sequenz entsprechen Fig. 1b, die von dem ersten Magnetkopf 5 abgetastet werden, während die Amplituden b, c, d der zweiten Kennsignal-Sequenz entsprechen, die von dem zweiten Kopf 5′ abgetastet wird, wobei nun die Amplitude b dermittleren Spur entspricht und die beiden Amplituden c und d (Fig. 1a) den benachbarten Spuren entsprechen. X stellt dabei das Kopfschaltsignal dar, das die beiden Köpfe jeweils zur richtigen Zeit aktiviert. In analoger Weise werden bei den folgenden Bandvorschubphasen z, für deren Weitertakten Ausgabeimpulse y sorgen, Amplitudenmessungen vorgenommen. T1 ist die Zeit, in der der Übersprechanteil a des Kennsignals A von dem ersten magnetkopf gemessen wird. Dieser Wert wird abgespeichert. T2 ist die Zeit, in der der Übersprechanteil b des Kennsignals B von dem ersten Magnetkopf gemessen wird. Dieser Wert wird ebenfalls abgespeichert. T3 ist die Zeit, in der der erste Magnetkopf das Kennsignal C in der mittleren Spur mißt. Auch dieser Wert wird abgespeichert.

In analoger Weise mißt der zweite Kopf anschließend die Amplituden T1′, T2′ und T3′, die ebenfalls gespeichert werden.

Wie die Sequenzen w zeigen, sind die Amplituden, die die beiden Köpfe messen, am Ausgang der zugehörigen Verstärker ungleich, Dies bedeutet, daß - wie eingangs erwähnt - dem Bandvorschubsystem ein falsches Spurnachsteuerungssignal zugeführt wird.

Dies vermeidet die Erfindung nun dadurch, daß die festgestellte Amplitudendifferenz zur Korrektur der Stellgröße für die Spurnachsteuerung verwendet wird. Hierfür gibt es mehrere Möglichkeiten. Eine besteht darin, von jeder Kennsignal-Sequenz die Amplituden T3 und T3′ der von beiden Magnetköpfen in der jeweils mittleren Spur abgetasteten Kennsignale auszuwählen, von den ausgewählten Amplituden den Quotienten Q zu bilden und zu speichern, und dann jedes weitere, von dem Kopf der die niedrigere oder höhere Amplitude geliefert hat, gemessene Kennsignal mit dem Quotienten Q zu beaufschlagen.

Dabei kann die Messung und der Amplitudenvergleich der in der mittleren Spur abgetasteten Kennsignale mehrfach erfolgen und jeweils der Mittelwert der Quotienten Q gebildet werden, so daß nach wenigen Meßzyklen ein sehr genauer Quotient vorliegt.

In weiterer Ausgestaltung kann die Differenz der Amplituden T1 und T2 der von dem einen Kopf in den Nachbarspuren abgetasteten Kennsignale und die Differenz der Amplituden T1′ und T2′ der von dem anderen Kopf in den Nachbarspuren abgetasteten und mit dem Quotienten Q beaufschlagten Kennsignale gebildet werden und aus den Differenzen der Mittelwert als korrigierte Stellgröße gebildet werden. Das Resultat ist eine Größe, deren Betrag die Abweichung von der Spurmitte anzeigt, und deren Vorzeichen die Richtung der Korrektur bestimmt.

Die vorangehend beschriebene Messung kann in einer Testphase mit eingelegter Meßkassette erfolgen, jedoch ist es auch möglich, die Messung beim Abspielen einer beliebigen Kassette durchzuführen und nach Kassettenwechsel zu wiederholen. Dies kann automatisch bei Einschaltung des Wiedergabebetriebs erfolgen. Von Vorteil ist dabei, daß auch fehlerhaft aufgezeichnete Kassetten in Spurmitte wiedergegeben werden. Wegen der Messung dauert es allerdings eine bestimmte Zeit, bis die Einrastung erfolgt und die Signalwiedergabe beginnen kann.

Es ist aber auch möglich, anstatt der Amplituden T3 und T3′ von jeder Kennsignal-Sequenz die Amplituden T1, T2 und T1′, T2′ der von beiden Magnetköpfen in den benachbarten Spuren abgetasteten Kennsignale auszunutzen, von den ausgenutzten Amplituden jedes Kopfen den Quotienten M, N zu bilden, und von den Quotienten den Mittelwert als korrigierte Stellgröße zu bilden, der dann die Spurmitten-Abweichung darstellt. Auch hierbei wird jede Kassette in Spurmitte wiedergegeben.

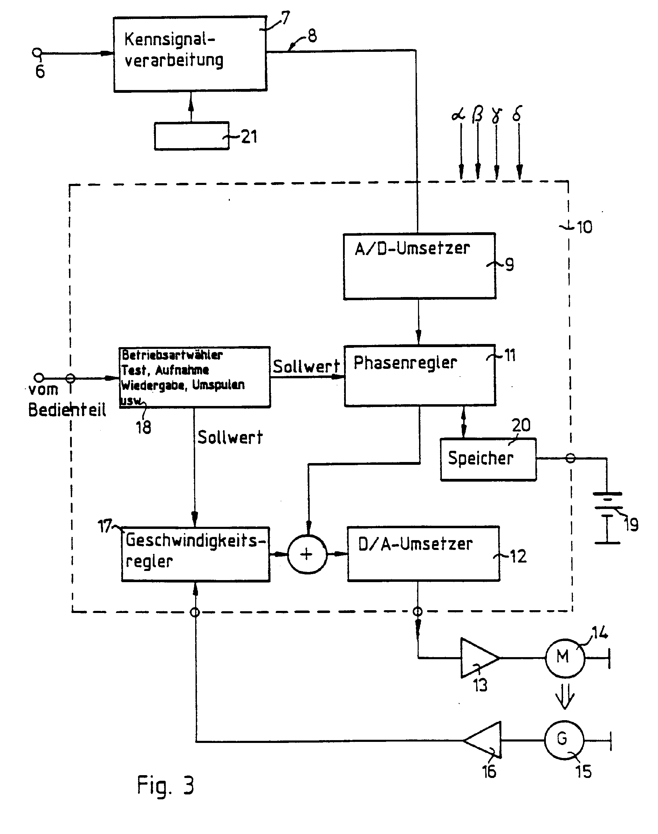

Das Blockschaltbild von Fig. 3 zeigt stark vereinfacht die Ausbildung der Schaltung für die Durchführung des erfindungsgemäßen Meß- und Korrekturverfahrens in einem Magnetbandgerät. Dem Eingang 6 der Verarbeitungsschaltung 7 Werden die durch Abtastung des Magnetbandes gewonnenen Kennsignale zur Verarbeitung zugeführt, Wobei die Verarbeitungsschaltung 7 auch die Kopfschaltsignale empfängt, die eine Kopftrommel-Servoschaltung 21 liefert. Die Signale vom Ausgang 8 der Verarbeitungsschaltung 7 werden einem A/D-Umsetzer 9 zugeführt, der Teil eine Mikrocomputers 10 ist, der durch die gestrichelten Linien angedeutet ist. Der A/D-Umsetzer 9 steuert einen Phasenregler 11 an, dessen Ausgang der Istwert der Spurlage-Information ist, die einem D-A-Um-setzer 12 zugeführt Wird, der über einen Endverstärker 13 den Motor 14 für den Bandvorschub steuert. Ein mit dem Motor 14 gekuppelter Frequenzgenerator 15 liefert über einen Verstärker 16 ein Istsignal an einen Geschwindigkeitsregler 17, der nach Maßgabe des ihm von einer Schaltung 18 vorgegebenen Sollwerts den D/A-Umsetzer 12 ansteuert. Die Schaltung 18, die auch dem Phasenregler 11 einen Sollwert übermittelt, ist mit dem Bedienteil des Magnetbandgerätes verbunden und leitet z.B. bei Wahl der Betriebsart 'Wiedergabe' den Meßvorgang ein, so daß in den Mikrocomputer die Auftastimpulse für die Weitertaktung der Bandvorschubphase eingegeben Werden und dementsprechende Sollwerte von der Schaltung 18 dem Phasenregler 11 und dem Geschwindigkeitsregler 17 zugeführt werden. Aus den während der verschiedenen Bandvorschubphasen gemessenen und vom Mikrocomputer verglichenen Amplituden der Kennsignale an den KopfverstärkerAusgängen wird dann - wie oben beschrieben - eine vom Mikrocomputer ermittelte Korrekturgröße in einen von einer Batterie 19 gespeisten Speicher 20 gegeben, der nach Beendigung des Meßvorgangs bei dem anschließend einsetzenden Wiedergabebetrieb dem Phasenregler 11 ständig eine Information liefert, die für eine richtige Spurlage sorgt.

Die Erfindung ist nicht auf die Verwendung in Geräten für digitale Tonaufzeichnung und -wiedergabe beschränkt, sondern sie kann gleichermaßen auch bei Videorecordern eingesetzt werden.

**Patentansprüche**

1. Verfahren zur Spurnachsteuerung in Magnetbandgeräten, bei dem wenigstens zwei auf einem rotierenden Rad angeordnete Magnetköpfe (5, 5') in schräg zur Längsachse des Magnetbandes (4) verlaufenden Spuren (1, 2, 3) Nutz- und Kennsignale aufzeichnen und lesen, wobei die in gleich langen aber in Spurlängsrichtung gegeneinander versetzten beschnitte (A, B, C, D) von innebeneinanderliegenden Spuren aufgezeichneten Kennsignale beim Lesevorgang nach Maßgabe der von Nachbarspuren abgetasteten Amplituden eine Stellgröße für das Bandvorschubsystem erzeugen, durch die die erforderliche Mittenlage der Magnetköpfe zu den Spuren hergestellt wird, **dadurch gekennzeichnet,** daß die Bandvorschubmittel vor dem Lesebetrieb für die Nutzsignale schrittweise so gesteuert werden, daß die Magnetköpfe ein- oder mehrfach die gesamte Spurbreite überstreichen, daß dabei jeweils in vorgegebenen relevanten Rotationspositionen der Magnetköpfe und damit Abtaststellungen entlang der Spuren die Amplituden (a, b, c) der Kennsignale gemessen werden, die in jeweils aufeinanderfolgenden Spuren von verschiedenen Magnetköpfen gelesen werden, daß aus der Amplitudensequenz jedes Magnetkopfes die Amplitude der jeweils mittleren Spur ausgewählt wird und die ausgewählten Amplituden miteinander verglichen werden und bei Feststellung eines Amplituden-Unterschieds Korrekturgrößen gebildet und gespeichert werden, mit denen bei dem nachfolgenden Lesebetrieb für die Nutzsignale die gebildete Stellgröße für die Spurmittennachsteuerung korrigiert wird.

2. Verfahren nach Anspruch 1, **dadurch gekennzeichnet,** daß ein Vergleich der ausgewählten Amplituden in der Weise vorgenommen wird, daß von den Amplituden der Quotient gebildet und dann gespeichert wird, und daß dann jedes weitere von dem Magnetkopf, der die niedrigere oder höhere Amplitude geliefert hat, gemessene Kennsignal mit dem Quotienten beaufschlagt wird.

3. Verfahren nach Anspruch 2, **dadurch gekennzeichnet,** daß die Messung und der Amplitudenvergleich der in der mittleren Spur abgetasteten Kennsignale mehrfach erfolgt und jeweils der Mittelwert der Quotienten gebildet wird.

4. Verfahren nach Anspruch 3, **dadurch gekennzeichnet,** daß die Differenz der Amplituden der von dem einen Kopf in den Nachbarspuren abgetasteten Kennsignale und die Differenz der Amplituden der von dem anderen Kopf in den Nachbarspuren abgetasteten und mit dem Quotienten beaufschlagten Kennsignale gebildet wird und daß aus den Differenzen der Mittelwert als korrigierte Stellgröße gebildet wird.

5. Magnetbandgerät mit wenigstens zwei auf einem rotierenden Rad angeordneten Magnetköpfen (5, 5'), die in schräg zur Längsachse des Magnetbandes (4) verlaufenden Spuren (1, 2, 3) Nutz- und Kennsignale aufzeichnen und lesen, und einem Bandvorschubsystem, daß die erforderliche Mittenlage der Magnetköpfe zu den Spuren herstellt, wobei die in gleich langen aber in Spurlängsrichtung gegeneinander versetzten Abschnitte (A, B, C, D) von in nebeneinanderliegenden Spuren aufgezeichneten Kennsignale beim Lesevorgang nach Maßgabe der von Nachbarspuren abgetasteten Amplituden eine Stellgröße für das Bandvorschubsystem erzeugen, **dadurch gekennzeichnet,** daß Mittel vorgesehen sind, welche vor dem Lesebetrieb für eine vorgegebene Zeit eine Meßphase einschalten, in der die Bandvorschubmittel schrittweise so gesteuert werden, daß die Magnetköpfe ein- oder mehrfach die gesamte Spurbreite überstreichen, daß dabei jeweils in vorgegebenen relevanten Rotationspositionen der Magnetköpfe und damit Abtaststellungen entlang der Spuren die Amplituden (a, b, c) der Kennsignale gemessen werden, die in jeweils aufeinanderfolgenden Spuren von verschiedenen Magnetköpfen gelesen werden, daß aus der Amplitudensequenz jedes Magnetkopfes die Amplitude der jeweils mittleren Spur ausgewählt wird und die ausgewählten Amplituden miteinander verglichen werden und bei Feststellung eines Amplituden-Unterschieds Korrekturgrößen gebildet und gespeichert werden, mit denen bei dem nachfolgenden Lesebetrieb für die Nutzsignale die gebildete Stellgröße für die Spurmittennachsteuerung korrigiert wird.

6. Gerät nach Anspruch 5, **dadurch gekennzeichnet,** daß die Mittel dem Betriebsartwähler (18) zugeordnet sind.

7. Gerät nach Anspruch 6, **dadurch gekennzeichnet,** daß dem Betriebsartwähler (18) eine besondere Schaltstellung für die Einschaltung der Meßphase zugeordnet ist.

8. Gerät nach Anspruch 6, **dadurch gekennzeichnet,** daß die Einschaltung der Meßphase bei jeder Einschaltung auf Wiedergabe automatisch erfolgt.

9. Gerät nach einem der Ansprüche 5 bis 8, **dadurch gekennzeichnet,** daß die Mittel (18) zur Einschaltung und Durchführung der Meßphase aus einem Mikrocomputer (10) bestehen.

10. Gerät nach Anspruch 9, **dadurch gekennzeichnet,** der Mikrocomputer (10) einen batteriebetriebenen Speicher (20) für die Korrekturgröße enthält.

## Claims

1. Method for track readjustment in magnetic tape units, in which at least two magnetic heads (5, 5′) arranged on a rotating wheel record and read useful and identifying signals in tracks (1, 2, 3) running obliquely to the longitudinal axis of the magnetic tape (4), where the identifying signals of mutually adjacent tracks, which signals are recorded in sections (A, B, C, D) of equal length but offset from one another in track longitudinal direction, generate during the reading operation in accordance with the amplitudes scanned from adjacent tracks a control variable for the tape feed system, by means of which control variable the required central position of the magnetic heads relative to the tracks is produced, **characterised in that** the tape feed means are prior to the reading operation for the useful signals controlled stepwise so that the magnetic heads sweep the entire track width once or a plurality of times, that in so doing there are measured, in each case in predetermined relevant rotational positions of the magnetic heads and hence scanning positions along the tracks, the amplitudes (a, b, c) of the identifying signals, which are read in respective successive tracks by different magnetic heads, that out of the amplitude sequence of each magnetic head the amplitude of the respective middle track is selected and the selected amplitudes are compared with one another and, in the event of an amplitude difference being found, corrective values are formed and stored, with which during the subsequent reading operation for the useful signals the control variable formed for the track centre readjustment is corrected.

2. Method according to claim 1, **characterised in that** a comparison of the selected amplitudes is carried out in such a way that from the amplitudes the quotient is formed and then stored, and that the quotient is then applied to each further identifying signal measured by the magnetic head which has supplied the lower or higher amplitude.

3. Method according to claim 2, **characterised in that** the measurement and the amplitude comparison of the identifying signals scanned in the central track takes place a plurality of times and the mean value of the quotients is formed in each case.

4. Method according to claim 3, **characterised in that** the difference of the amplitudes of the identifying signals scanned by the one head in the adjacent tracks and the difference of the amplitudes of the identifying signals scanned by the other head in the adjacent tracks, and to which the quotient, is applied is formed and that from the difference the mean value is formed as corrected control variable.

5. Magnetic tape unit with at least two magnetic heads (5, 5′) arranged on a rotating wheel, which record and read useful and identifying signals in tracks (1, 2, 3) running obliquely to the longitudinal axis of the magnetic tape (4), and with a tape feed system which produces the required central position of the magnetic heads relative to the tracks, where the identifying signals of mutually adjacent tracks, which signals are recorded in sections (A, B, C, D) of equal length but offset from one another in track longitudinal direction, generate during the reading operation in accordance with the amplitudes scanned from adjacent tracks a control variable for the tape feed system, **characterised in that** means are provided which prior to the reading operation switch on for a predetermined time a measurement phase in which the tape feed means are controlled step-wise so that the magnetic heads sweep the entire track width once or a plurality of times, that in so doing there are measured, in each case in predetermined relevant rotational positions of the magnetic heads and hence scanning positions along the tracks, the amplitudes (a, b, c) of the identifying signals, which are read in respective successive tracks by different magnetic heads, that out of the amplitude sequence of each magnetic head the amplitude of the respective middle track is selected and the selected amplitudes are compared with one another and, in the event of an amplitude difference being found, corrective values are formed and stored, with which during the subsequent reading operation for the useful signals the control variable formed for the track centre readjustment is corrected.

6. Unit according to claim 5, **characterised in that** the means are assigned to the operating mode selector (18).

7. Unit according to claim 6, **characterised in that** there is assigned to the operating mode selector (18) a special switch position for the switching on of the measuring phase.

8. Unit according to claim 6, **characterised in that** the switching on of the measuring phase takes place automatically with each switching on of playback.

9. Unit according to any one of claims 5 to 8, **characterised in that** the means (18) for the switching on and execution of the measuring phase consist of a microcomputer (10).

10. Unit according to claim 9, **characterised in that** the microcomputer (10) contains a battery-operated storage means (20) for the correction value.

**Revendications**

1. Procédé pour la poursuite de pistes dans des appareils à bande magnétique dans lequel au moins deux têtes magnétiques (5, 5′) placées sur une roue rotative enregistrent et lisent des signaux utiles et des signaux d'identification dans des pistes (1, 2, 3) qui sont obliques par rapport à l'axe longitudinal de la bande magnétique (4), les signaux d'identification enregistrés dans des sections (A, B, C, D) de pistes juxtaposées, sections qui sont de même longueur mais qui sont décalées les unes par rapport aux autres dans le sens longitudinal de la piste, produisant, lors de l'opération de lecture après détermination des amplitudes balayées par les pistes voisines, une variable réglante pour le système d'avancement de la bande, au moyen de laquelle la position centrale nécessaire des têtes magnétiques par rapport aux pistes est réalisée, **caractérisé en ce que** les moyens d'avancement de la bande sont commandés pas à pas pour les signaux utiles avant le mode lecture de telle manière que les têtes magnétiques balayent une ou plusieurs fois toute la largeur des pistes, que, ce faisant, les amplitudes (a, b, c) des signaux d'identification, qui sont lus dans des pistes respectivement successives par différentes têtes magnétiques, sont mesurées dans des positions de rotation pertinentes prédéterminées des têtes magnétiques et donc dans des positions de balayage le long des pistes, que l'amplitude de la piste respectivement au milieu est sélectionnée à partir de la séquence d'amplitude de chaque tête magnétique et que les amplitudes sélectionnées sont comparées les unes aux autres et que, lorsqu'une différence d'amplitude est constatée, des valeurs de correction sont formées et mémorisées, valeurs de correction avec lesquelles la variable réglante formée pour la poursuite du milieu de la piste est corrigée lors de l'opération de lecture des signaux utiles qui suit.

2. Procédé selon la revendication 1, **caractérisé en ce qu'**une comparaison des amplitudes sélectionnées est effectuée de manière que le quotient des amplitudes est formé et ensuite mémorisé et que tout autre signal d'identification mesuré par la tête magnétique qui a livré l'amplitude la plus faible ou la plus haute est doté du quotient.

3. Procédé selon la revendication 2, **caractérisé en ce que** la mesure et la comparaison des amplitudes des signaux d'identification balayés dans la piste du milieu est effectuée plusieurs fois et que la moyenne des quotients est formée à chaque fois.

4. Procédé selon la revendication 3, **caractérisé en ce que** la différence des amplitudes des signaux d'identification balayés par l'une des têtes dans les pistes voisines et la différence des amplitudes des signaux d'identification balayés par l'autre tête dans les pistes voisines et pourvus du quotient est formée et que la moyenne est formée comme variable réglante corrigée à partir des différences.

5. Appareil à bande magnétique avec au moins deux têtes magnétiques (5, 5′) placées sur une roue rotative enregistrent et lisent des signaux utiles et des signaux d'identification dans des pistes (1, 2, 3) qui sont obliques par rapport à l'axe longitudinal de la bande magnétique (4), les signaux d'identification enregistrés dans des sections (A, B, C, D) de pistes juxtaposées, sections qui sont de même longueur mais qui sont décalées les unes par rapport aux autres dans le sens longitudinal de la piste, produisant, lors de l'opération de lecture après détermination des amplitudes balayées par les pistes voisines, une variable réglante pour le système d'avancement de la bande, **caractérisé en ce que** des moyens sont prévus qui mettent en circuit une phase de mesure, avant l'opération de lecture, pour une durée prédéterminée, phase dans laquelle les moyens d'avancement de la bande sont commandés pas à pas de telle manière que les têtes magnétiques balayent une ou plusieurs fois l'ensemble de la largeur des pistes, que, ce faisant, les amplitudes (a, b, c) des signaux d'identification, qui sont lus dans des pistes respectivement successives par différentes têtes magnétiques, sont mesurées dans des positions de rotation pertinentes prédéterminées des têtes magnétiques et donc dans des positions de balayage le long des pistes, que l'amplitude de la piste respectivement au milieu est sélectionnée à partir de la séquence d'amplitude de chaque tête magnétique et que les amplitudes sélectionnées sont comparées les unes aux autres et que, lorsqu'une différence d'amplitude est constatée, des valeurs de correction sont formées et mémorisées, valeurs de correction avec lesquelles la variable réglante formée pour la poursuite du milieu de la piste est corrigée lors de l'opération de lecture des signaux utiles qui suit.

6. Appareil selon la revendication 5, **caractérisé en ce que** les moyens sont affectés au sélecteur de modes (18):

7. Appareil selon la revendication 6, **caractérisé en ce qu'**une position de commutation particulière est affectée au sélecteur de modes (18) pour la mise en circuit de la phase de mesure.

8. Appareil selon la revendication 6, **caractérisé en ce que** la mise en circuit de la phase de mesure est effectuée automatiquement à chaque mise en circuit sur reproduction.

9. Appareil selon l'une des revendications 5 à 8, **caractérisé en ce que** les moyens (18) pour la mise en circuit et la réalisation de la phase de mesure se composent d'un micro-ordinateur (10).

10. Appareil selon la revendication 9, **caractérisé en ce que** le micro-ordinateur (10) contient une mémoire fonctionnant à piles (20) pour la grandeur de correction.

Fig. 1a

Fig. 1b

Fig. 2

Fig. 3